# EUROPÄISCHE PATENTSCHRIFT

(11) **EP 2 890 473 B1**
(45) Veröffentlichungstag und Bekanntmachung des Hinweises auf die Patenterteilung: **18.04.2018**
(21) Anmeldenummer: 13752830.3
(22) Anmeldetag: 14.08.2013
(51) Int. Cl.: B01D 46/00, B01D 46/24, B01D 46/52

(54) **TRENNVORRICHTUNG ZUM ABTRENNEN VON VERSCHMUTZUNGEN AUS GASEN**
SEPARATION DEVICE FOR SEPARATING IMPURITIES FROM GASES
DISPOSITIF DE SÉPARATION DESTINÉ À EXTRAIRE DES IMPURETÉS CONTENUES DANS DES GAZ

(30) Priorität: 29.08.2012 DE 102012017101
(43) Veröffentlichungstag der Anmeldung: 08.07.2015
(73) Patentinhaber: Hydac Process Technology GmbH, 66538 Neunkirchen (DE)
(72) Erfinder: SCHLICHTER, Bernhard, 66123 Saarbrücken (DE); ZELLER, Sergej, 67734 Katzweiler (DE); DEUTSCHMEYER, Manfred, 66706 Perl (DE)
(74) Vertreter: Bartels und Partner, Patentanwälte
(86) Internationale Anmeldenummer: PCT/EP2013/002442
(87) Internationale Veröffentlichungsnummer: WO 2014/032774

(56) Entgegenhaltungen:
- EP-A1- 0 337 248
- US-A- 3 364 658
- US-A- 3 771 295
- US-A- 4 087 264
- US-A- 4 600 416
- US-A- 4 848 989
- US-A1- 2007 175 191
- US-A1- 2011 056 381

## Beschreibung

Die Erfindung betrifft eine Trennvorrichtung zum Abtrennen von Verschmutzungen aus Gasen, wie Prozessgasen oder Wasserstoff, mit den Merkmalen im Oberbegriff von Anspruch 1.

Wenn Gase als Betriebsmittel, als Reagenzien oder dergleichen bei technischen Prozessen zum Einsatz kommen, gefährden Verschmutzungen in Form partikulärer und/oder fluider Medien in den betreffenden Prozessgasen die Betriebssicherheit bis hin zum Systemausfall, können Analyseergebnisse verfälschen oder andere Störungen zur Folge haben. Vielfach weisen die zur Verfügung stehenden Gase neben partikulären Verschmutzungen Belastungen durch fluide Medien wie Wasser und Öl auf. U.a. muss bei der in neuerer Zeit zunehmenden Anwendung von Wasserstoff (H₂) für Antriebszwecke mit derartigen Belastungen des als Betriebsmittel dienenden Gases gerechnet werden. Für die Betriebsfähigkeit der betreffenden, zugeordneten Systeme, wie insbesondere Brennstoffzellen, ist eine Freiheit von partikulären und fluiden Verschmutzungen, wie Wasser und Öl, unabdingbar.

Die US 2011/0056381 A1 und die US 2007/01 75191 A1 beschreiben jeweils eine Trennvorrichtung zum Abtrennen von Verschmutzungen aus Gasen, wie Prozessgasen oder Wasserstoff, mit einer Filtereinrichtung zum Abscheiden partikulärer und fluider Medien, wie Wasser und/oder Öl, mit einer Koaleszereinrichtung zur Vergrößerung des Tropfenvolumens abgeschiedener fluider Medien sowie mit einer Auffangeinrichtung, vorzugsweise in Form einer Absorbereinrichtung, zur Bindung der abgeschiedenen fluiden Medien, wobei die Trennvorrichtung mindestens ein Trennelement aufweist, wobei das jeweilige Trennelement in der Art einer Filterpatrone mit einem Mediendurchlässe aufweisenden, die Hauptachse koaxial umgebenden Stützrohr ausgebildet ist, dessen Außenseite von Koaleszereinrichtung und Filtereinrichtung umgeben ist. In das Unterteil des Stützrohrs erstreckt sich eine hutförmig nach innen gezogenen Endkappe.

Im Hinblick auf diese Problematik stellt sich die Erfindung die Aufgabe, eine verbesserte Trennvorrichtung zur Verfügung zu stellen, die eine effizientere Abtrennung derartiger Verschmutzungen aus Prozessgasen, insbesondere aus für technische Zwecke vorgesehenem Wasserstoff, ermöglicht.

Erfindungsgemäß ist diese Aufgabe durch eine Trennvorrichtung gelöst, die die Merkmale des Patentanspruches 1 in seiner Gesamtheit aufweist.

Danach sieht die Erfindung vor, dass der Innenraum des Stützrohres in einen oberen Abströmraum, aus dem das abgereinigte Gas abgebbar ist, und in eine untere, die Absorbereinrichtung bildende Absorberkammer unterteilt ist und dass das Stützrohr aus koaxialen Rohrteilen zusammengesetzt ist, die an einem Zwischenstück miteinander verbunden sind, das den Abströmraum von der Absorberkammer trennt. Die Trenneinrichtung zeichnet sich dadurch durch besondere Kompaktheit aus, weil die Absorberkammer im unteren Teilabschnitt des zusammengesetzten Stützrohres in die Filterpatrone integriert ist.

Es ist ferner vorgesehen, dass die Trennvorrichtung eine Filtereinrichtung zum Abscheiden partikulärer und fluider Medien wie Wasser und/oder Öl, eine Koaleszereinrichtung zur Vergrößerung des Tropfenvolumens abgeschiedener fluider Medien, sowie eine Auffangeinrichtung aufweist, die vorzugsweise in Form einer Absorbereinrichtung ausgebildet ist, die abgeschiedene fluide Medien bindet.

Das Trennelement lässt sich als kompakte Baueinheit realisieren, die nach Ablauf der jeweils vorgesehenen Betriebsintervalle auf einfache Weise auswechselbar ist.

Gemäß einem vorteilhaften Ausführungsbeispiel der Erfindung weist die Trennvorrichtung mindestens ein Trennelement auf, das eine Hauptachse definiert und in einem Gehäuse derart aufnehmbar ist, dass die Hauptachse zumindest näherungsweise vertikal gerichtet ist, wobei die Absorbereinrichtung in einem den Übertritt fluider Medien von der Koaleszereinrichtung zur Absorbereinrichtung durch Schwerkrafteinfluss ermöglichenden Bereich des Trennelements angeordnet ist. Dadurch ist eine Vorrichtung geschaffen, die einfach aufgebaut ist und einen selbständigen Betrieb ohne Zusatzeinrichtungen ermöglicht, weil die Überführung abgeschiedener, fluider Medien zur Absorbereinrichtung selbsttätig durch Schwerkrafteinfluss erfolgt.

Für einen derartigen Trennvorgang, bei dem das abzureinigende Gas das Trennelement von außen her zum inneren Abströmraum hin durchströmt, ist das Stützrohr bei vorteilhaften Ausführungsbeispielen, von außen nach innen, von plissiertem Filtermaterial der Filtereinrichtung und von einer ein Teil der Koaleszereinrichtung bildenden Drainagelage umgeben, in der durch die Filtereinrichtung abgeschiedene, vorkoagulierte fluide Medien unter Vergrößerung der Tropfengröße nach unten zum Bereich der Absorberkammer absinken.

Vorzugsweise ist als Filtermaterial eine eine Vorkoagulation fluider Medien bewirkende, vorzugsweise mehrlagige Filtermatte aus Fasermaterial, etwa in Form eines Metallfaservlieses, vorgesehen.

Auch kann eine derartige Filtermatte aus einem Fasermaterial ein sogenanntes Mesh-Pack bilden.

Als Drainagelage kann mit Vorteil ein metallisches Gitter oder eine etwa nach dem Spun-Spray-Verfahren aufgetragene Lage aus Fasermaterial vorgesehen sein.

Bei besonders vorteilhaften Ausführungsbeispielen enthält die Absorbereinrichtung ein in der Absorberkammer befindliches Gemisch aus hydrophilen Stoffen und aus oleophilen Stoffen.

Ein derartiges Stoffgemisch kann Stoffe wie Silicagel oder Zeolithperlen als hydrophile Bestandteile und Stoffe wie Kieselgur oder Melt-blown Fasermaterial als oleophile Bestandteile der Füllung der Absorberkammer aufweisen.

Bei einer derartigen Bauweise mit zusammengesetztem Stützrohr kann die Anordnung mit Vorteil so getroffen sein, dass an der Außenseite des dem Abströmraum zugeordneten Rohrteiles eine Fluide zurückhaltende Barriere vorgesehen ist, die beispielsweise durch ein hydrophobiertes und/oder oleophobes Gewebe gebildet ist. Eine derartige Barriere kann auch durch jedwede Struktur einer Feinheit, die einen Gasdurchtritt, jedoch keinen Durchtritt von Tropfen zulässt, gebildet sein.

Nachstehend ist die Erfindung anhand eines in der Zeichnung dargestellten Ausführungsbeispieles im Einzelnen erläutert. Es zeigen:
- Fig. 1: einen Längsschnitt eines Trennelements gemäß einem Ausführungsbeispiel der erfindungsgemäßen Trennvorrichtung; und
- Fig. 2: einen Teilquerschnitt des Trennelements entsprechend der Schnittlinie II-II von Fig. 1.

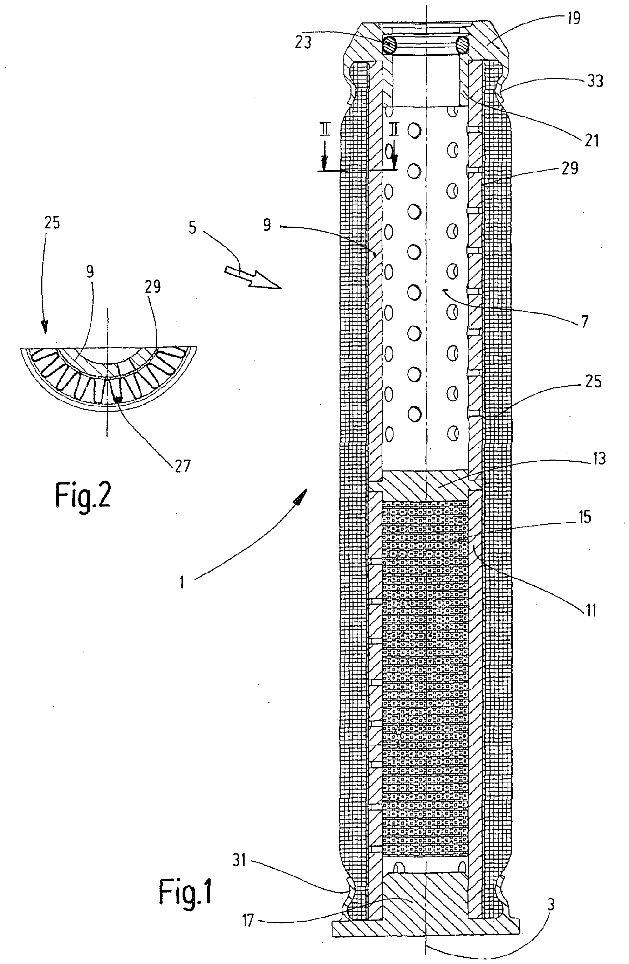

Das in Fig. 1 dargestellte, als Ganzes mit 1 bezeichnete Trennelement ist als Bestandteil der erfindungsgemäßen Trennvorrichtung in einem nicht dargestellten Gehäuse aufnehmbar. Für den Betrieb der Trennvorrichtung ist das Trennelement 1 in dem zugehörigen Gehäuse derart angeordnet, dass die vom Trennelement 1 gebildete Hauptachse 3 zumindest näherungsweise vertikal ausgerichtet ist. Bei einem Einsatz der Trennvorrichtung bei einem Betankungssystem für eine mit Wasserstoff betriebene Antriebseinrichtung, ist das das Trennelement 1 aufnehmende Gehäuse für ein bei derartigen Anwendungen übliches, sehr hohes Druckniveau von beispielsweise 750 bis 1000 bar ausgelegt und derart eingerichtet, dass das Trennelement 1 im Betrieb von dem abzureinigenden Wasserstoff (H₂) von außen her angeströmt wird, wie dies mit einem Strömungspfeil 5 angedeutet ist. Das abgereinigte Gas tritt aus einer im Inneren des Trennelements 1 befindlichen, mit 7 bezeichneten Abströmkammer nach oben aus.

Das Trennelement 1 ist in der Art einer sog. Filterpatrone ausgebildet, mit einem Stützrohr, das aus zwei Rohrteilen 9 und 11 zusammengesetzt ist, die koaxial zur Hauptachse 3 und miteinander fluchtend angeordnet sowie durch ein Zwischenstück 13 miteinander verbunden sind. Beide das Stützrohr bildende Rohrteile 9, 11 weisen in der bei Stützrohren üblichen Art und Weise Mediendurchlasse auf, die in der Zeichnung nicht beziffert sind. Das Zwischenstück 13 trennt den vom Stützrohr 9, 11 umgebenen Hohlraum in die obere Abströmkammer 7, die sich im oberen Rohrteil 9 befindet, von einer unteren Absorberkammer 15, die vom unteren Rohrteil 11 umgeben ist. Die Absorberkammer 15 ist am unteren Ende des Rohrteils 11 durch ein Abschlussstück 17 in Form eines Stopfens geschlossen. Am oberen Ende des Trennelements 1 ist für den Austritt abgereinigten Gases aus der Abströmkammer 7 ein Anschlussstück 19 vorgesehen, das sich mit einem Stutzen 21 in das obere Ende des Rohrteils 9 erstreckt und an dem sich für den Anschluss einer nicht gezeigten Leitung eine Abdichtung in Form eines O-Ringes 23 befindet.

An der Außenseite des Trennelements 1 befindet sich eine Filtereinrichtung in Form einer vom fiktiven Außenumfang her kreiszylinderförmigen Filterstruktur 25. Dabei handelt es sich um ein wasserabscheidendes Material, das, wie Fig. 2 zeigt, plissiert ist und vorzugsweise mehrlagig aufgebaut ist. Vorzugsweise kann als Filtermaterial eine eine Vorkoagulation fluider Medien bewirkende Filterstruktur 25 in Form eines Metallfaservlieses vorgesehen sein, wobei ein sog. Mesh-pack gebildet sein kann, das an einer Längsnaht 27 geschlossen ist. An die Innenseite der Filterstruktur 25 schließt sich als Koaleszereinrichtung eine Drainagelage 29 an. Dabei handelt es sich beim vorliegenden Ausführungsbeispiel um eine als Koaleszer wirkende Struktur, in der sich durch Vorkoagulation an der Filterstruktur 25 gebildete Tröpfchen aus Wasser und/oder Öl zu größeren Tropfenvolumina koagulieren, so dass diese Medien durch Schwerkraft nach unten unter stetiger Zunahme der Tropfengröße absinken.

Anstelle des plissierten Filtermediums kann als Filterstruktur eine vorzugsweise mehrlagige Filtermatte treten, die plissiert oder als zylindrische Rollkörper ausgebildet sein kann. Die Drainagelage 29 kann ein metallisches Gitter oder eine Fasermateriallage sein, die auf die Innenseite des plissierten Filtermediums 25 beispielsweise nach dem Spun-Spray-Verfahren unmittelbar aufgetragen ist. Sobald die gebildeten Tropfen in den Bereich des unteren Rohrteils 11 des Stützrohres abgesunken sind, in dem sich die Absorberkammer 15 befindet, gelangt die Ansammlung der gebildeten Tropfen über die Fluiddurchlässe des Rohteils 11 in die Absorberkammer 15. Um die Fluide zu binden, befindet sich in der Absorberkammer 15 ein Stoffgemisch aus hydrophilen Stoffen sowie aus oleophilen Stoffen. Mit Vorteil kann hierbei ein Gemisch aus Silicagel oder Zeolithperlen als hydrophile Bestandteile und aus Stoffen wie Kieselgur oder Melt-blown Fasermaterial als oleophile Bestandteile vorgesehen sein.

Innerhalb der Drainagelage 29 kann entlang des der Abströmkammer 7 zugeordneten oberen Rohrteils 9 eine Fluide zurückhaltende Barriere vorgesehen sein, beispielsweise gebildet durch ein hydrophobiertes und/oder oleophobes Gewebe. Die so gebildete Baueinheit ist am in der Zeichnung unteren Ende mittels des Abschlussstücks 17 und am oberen Ende mittels des Anschlussstücks 19 zusammengehalten. An beiden diesen Teilen 17 und 19 befinden sich Randteile 31 bzw. 33, die axial vorspringen und den zugewandten Rand der Filtermatte 25 übergreifen. Wie Fig. 1 zeigt, sind diese Wandteile 31, 33 durch Aufbringen von radial nach innen gerichteter Druckkraft nach innen verpressbar, um Abschlussstück 17 und Anschlussstück 19 an der an der Filtermatte 25 gebildeten Einschnürung festzulegen.

## Patentansprüche

1. Trennvorrichtung zum Abtrennen von Verschmutzungen aus Gasen, wie Prozessgasen oder Wasserstoff, mit einer Filtereinrichtung (25) zum Abscheiden partikulärer und fluider Medien, wie Wasser und/ oder Öl, mit einer Koaleszereinrichtung (29) zur Vergrößerung des Tropfenvolumens abgeschiedener fluider Medien sowie mit einer Auffangeinrichtung in Form einer Absorbereinrichtung (15) zur Bindung der abgeschiedenen fluiden Medien, wobei die Trennvorrichtung mindestens ein Trennelement (1) aufweist, wobei das jeweilige Trennelement (1) in der Art einer Filterpatrone mit einem Mediendurchlässe aufweisenden, die Hauptachse (3) koaxial umgebenden Stützrohr (9, 11) ausgebildet ist, dessen Außenseite von Koaleszereinrichtung (29) und Filtereinrichtung (25) umgeben ist, **dadurch gekennzeichnet, dass** der Innenraum des Stützrohres (9, 11) in einen oberen Abströmraum (7), aus dem das abgereinigte Gas abgebbar ist, und in eine untere, die Absorbereinrichtung bildende Absorberkammer (15) unterteilt ist und dass das Stützrohr aus koaxialen Rohrteilen (9, 11) zusammengesetzt ist, die an einem Zwischenstück (13) miteinander verbunden sind, das den Abströmraum (7) von der Absorberkammer (15) trennt.

2. Trennvorrichtung nach Anspruch 1, **dadurch gekennzeichnet, dass** das mindestens eine Trennelement (1) eine Hauptachse (3) definiert und in einem Gehäuse derart aufnehmbar ist, dass die Hauptachse (3) zumindest näherungsweise vertikal gerichtet ist, und dass die Absorbereinrichtung (15) in einem den Übertritt fluider Medien von der Koaleszereinrichtung (29) zur Absorbereinrichtung durch Schwerkrafteinfluss ermöglichenden Bereich des Trennelements (1) angeordnet ist.

3. Trennvorrichtung nach Anspruch 1 oder 2, **dadurch gekennzeichnet, dass** für einen Trennvorgang, bei dem das abzureinigende Gas das Trennelement (1) von außen her zum inneren Abströmraum (7) durchströmt, das Stützrohr (9, 11), von außen nach innen, von plissiertem Filtermaterial der Filtereinrichtung (25) und von einer ein Teil der Koaleszereinrichtung bildenden Drainagelage (29) umgeben ist, in der durch die Filtereinrichtung (25) abgeschiedene, vorkoagulierte fluide Medien unter Vergrößerung der Tropfengröße nach unten zum Bereich der Absorberkammer (15) absinken.

4. Trennvorrichtung nach einem der vorstehenden Ansprüche, **dadurch gekennzeichnet, dass** als Filtermaterial eine eine Vorkoagulation fluider Medien bewirkende, vorzugsweise mehrlagige Filterstruktur (25) aus Fasermaterial, etwa in Form eines Metallfaservlieses, vorgesehen ist.

5. Trennvorrichtung nach einem der vorstehenden Ansprüche, **dadurch gekennzeichnet, dass** eine ein Mesh-Pack bildende Filterstruktur (25) vorgesehen ist.

6. Trennvorrichtung nach einem der vorstehenden Ansprüche, **dadurch gekennzeichnet, dass** die Drainagelage (29) ein metallisches Gitter oder eine etwa nach dem Spun-Spray-Verfahren aufgetragene Lage aus Fasermaterial aufweist.

7. Trennvorrichtung nach einem der vorstehenden Ansprüche, **dadurch gekennzeichnet, dass** die Absorbereinrichtung ein in der Absorberkammer (15) befindliches Gemisch aus hydrophilen Stoffen und aus oleophilen Stoffen enthält.

8. Trennvorrichtung nach einem der vorstehenden Ansprüche, **dadurch gekennzeichnet, dass** Stoffe wie Silicagel oder Zeolithperlen als hydrophile Bestandteile und Stoffe wie Kieselgur oder Melt-blown Fasermaterial als oleophile Bestandteile der Füllung der Absorberkammer (15) vorgesehen sind.

9. Trennvorrichtung nach einem der vorstehenden Ansprüche, **dadurch gekennzeichnet, dass** an der Außenseite des dem Abströmraum (7) zugeordneten Rohrteils (9) eine Fluid zurückhaltende Barriere vorgesehen ist, die beispielsweise durch ein hydrophobiertes und/oder oleophobes Gewebe gebildet ist.

## Claims

1. A separation device for separating impurities from gases, such as process gases or hydrogen, comprising a filter device (25) for separating out particulate and fluid media, such as water and/or oil, with a coalescing device (29) for increasing the droplet volume of fluid media that have been separated off, and comprising a collecting device in the form of an absorption device (15) for binding the fluid media that have been separated off, the separation device having at least one separating element (1), the respective separating element (1) being designed in the manner of a filter cartridge with a support tube (9, 11) coaxially encompassing the primary axis (3) and having media channels, the outside of which tube is encompassed by the coalescing device (29) and the filter device (25), **characterised in that** the internal space of the support tube (9, 11) is subdivided into an upper discharge chamber (7), from which the cleaned gas can be discharged, and into a lower absorber chamber (15) that forms the absorption device, and that the support tube is composed of coaxial tube parts (9, 11) which are connected to one another at an intermediate piece (13) which separates the discharge chamber (7) from the absorber chamber (15).

2. The separation device according to Claim 1, **characterised in that** the at least one separating element (1) defines a primary axis (3) and can be accommodated in a housing such that the primary axis (3) is oriented at least approximately vertically, and that the absorption device (15) is disposed in a region of the separating element (1) that enables the transfer of fluid media from the coalescing device (29) to the absorption device by the effect of gravity.

3. The separation device according to Claim 1 or 2, **characterised in that** for a separation process, in which the gas that is to be cleaned flows through the separating element (1) from the outside to the inner discharge chamber (7), the support tube (9, 11) is encompassed from the outside to the inside by pleated filter material of the filter device (25) and by a drainage layer (29) forming part of the coalescing device and in which pre-coagulated fluid media that have been separated off by the filter device (25) sink down to the region of the absorber chamber (15) as the droplet size increases.

4. The separation device according to any of the preceding claims, **characterised in that** a preferably multi-layered filter structure (25) made of fibrous material, for example in the form of a metal fibre non-woven, and which causes the pre-coagulation of fluid media, is provided as the filter material.

5. The separation device according to any of the preceding claims, **characterised in that** a filter structure (25) forming a mesh packet is provided.

6. The separation device according to any of the preceding claims, **characterised in that** the drainage layer (29) comprises a metallic mesh or a layer of fibrous material that has been applied, for example, by the spun-spray method.

7. The separation device according to any of the preceding claims, **characterised in that** the absorption device contains a mixture of hydrophilic substances and oleophilic substances in the absorber chamber (15).

8. The separation device according to any of the preceding claims, **characterised in that** substances such as silica gel or zeolite beads are provided as hydrophilic components, and substances such as diatomaceous earth or melt-blown fibrous material are provided as oleophilic components of the filling of the absorber chamber (15).

9. The separation device according to any of the preceding claims, **characterised in that** a fluid-restraining barrier is provided on the outside of the tube part (9) associated with the discharge chamber (7), which barrier is formed, for example, by a hydrophobized and/or oleophobic fabric.

## Revendications

1. Dispositif de séparation, pour séparer des impuretés de gaz, comme des gaz de processus ou de l'hydrogène, ayant un dispositif (25) de filtration pour séparer des milieux en particules et fluides, comme de l'eau et/ou de l'huile, ayant un dispositif (29) de coalescence pour agrandir le volume de gouttes de milieux fluides séparés, ainsi qu'un dispositif de recueil, sous la forme d'un dispositif (15) d'absorption, pour fixer les milieux fluides séparés, le dispositif de séparation, ayant au moins un élément (1) de séparation, l'élément (1) de séparation étant constitué à la manière d'une cartouche de filtre, ayant un tuyau (9,11) d'appui, qui a des passages pour des fluides, qui entoure coaxialement l'axe (3) principal et dont la face extérieure est entourée du dispositif (29) de coalescence et du dispositif (25) de filtration, **caractérisé en ce que** l'intérieur du tuyau (9, 11) d'appui est subdivisé en un espace (7) supérieur d'évacuation, dont le gaz épuré peut être évacué, et en une chambre (15) inférieure d'absorption, formant le dispositif d'absorption, et **en ce que** le tuyau d'appui est composé de parties (9, 11) tubulaires coaxiales, qui sont reliées entre elles sur une pièce (13) intermédiaire, qui sépare l'espace (7) d'évacuation de la chambre (15) d'absorption.

2. Dispositif de séparation suivant la revendication 1, **caractérisé en ce que** le au moins un élément (1) de séparation définit un axe (3) principal et peut être logé dans une enveloppe, **en ce que** l'axe (3) principal est dirigé au moins à peu près verticalement et **en ce que** le dispositif (15) d'absorption est mis dans une partie de l'élément de séparation permettant le passage de milieux fluides du dispositif (29) de coalescence au dispositif d'absorption par la force de gravité.

3. Dispositif de séparation suivant la revendication 1 ou 2, **caractérisé en ce que**, pour une opération de séparation, dans laquelle le gaz à épurer traverse l'élément (1) de séparation de l'extérieur vers l'espace (7) intérieur d'évacuation, le tuyau (9, 11) d'appui est entouré, de l'extérieur, d'une matière filtrante plissée du dispositif (25) de filtration et d'une couche (29) de drainage, qui forme une partie du dispositif de coalescence et dans laquelle des milieux fluides précoagulés et séparés par le dispositif (25) de filtration descendent, avec agrandissement de la dimension de gouttes, vers la partie de la chambre (15) d'absorption.

4. Dispositif de séparation suivant l'une des revendications précédentes, **caractérisé en ce qu'**il est prévu comme matière filtrante, une structure (25) filtrante en matière fibreuse, par exemple sous la forme d'un non-tissé de fibres métalliques, provoquant une précoagulation de milieux fluides, de préférence une structure (25) filtrante à plusieurs couches.

5. Dispositif de séparation suivant l'une des revendications précédentes, **caractérisé en ce qu'**il est prévu une structure (25) filtrante formant un mesh pack.

6. Dispositif de séparation suivant l'une des revendications précédentes, **caractérisé en ce que** la couche (29) de drainage a une grille métallique ou une couche en matière fibrante déposée par le procédé spun spray.

7. Dispositif de séparation suivant l'une des revendications précédentes, **caractérisé en ce que** le dispositif d'absorption contient un mélange de substances hydrophiles et de substances oléophiles se trouvant dans la chambre (15) d'absorption.

8. Dispositif de séparation suivant l'une des revendications précédentes, **caractérisé en ce qu'**il est prévu des substances, comme du gel de silice ou des perles de zéolithe, comme constituants hydrophiles, et des substances comme de la terre de diatomite ou de la matière fibreuse melt blown, comme constituants oléophiles du garnissage de la chambre (15) d'absorption.

9. Dispositif de séparation suivant l'une des revendications précédentes, **caractérisé en ce qu'**il est prévu sur la face extérieure de la partie (9) de tuyau, associée à l'espace (7) d'évacuation, une barrière retenant du fluide, formée par exemple par un tissu rendu hydrophobe et/ou oléophobe.
